(19) Europäisches Patentamt
European Patent Office
Office européen des brevets

(11) **EP 4 492 259 A1**

(12) **EUROPEAN PATENT APPLICATION**
published in accordance with Art. 153(4) EPC

(43) Date of publication:
**15.01.2025 Bulletin 2025/03**

(21) Application number: **23807041.1**

(22) Date of filing: **18.05.2023**

(51) International Patent Classification (IPC):
***G06F 16/583*** (2019.01)  ***G06F 18/2411*** (2023.01)
***G06N 20/00*** (2019.01)

(52) Cooperative Patent Classification (CPC):
**G06F 16/583; G06F 16/901; G06F 16/903;**
**G06F 16/906; G06F 18/2411; G06N 20/00**

(86) International application number:
**PCT/CN2023/095087**

(87) International publication number:
**WO 2023/222091 (23.11.2023 Gazette 2023/47)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **18.05.2022 CN 202210546971**

(71) Applicant: **Huawei Technologies Co., Ltd.**
**Shenzhen, Guangdong 518129 (CN)**

(72) Inventors:
• **MA, Jingting**
  **Shenzhen, Guangdong 518129 (CN)**

• **FU, Shuo**
  **Shenzhen, Guangdong 518129 (CN)**
• **XUE, Daihao**
  **Shenzhen, Guangdong 518129 (CN)**
• **WANG, Bing**
  **Shenzhen, Guangdong 518129 (CN)**
• **ZHANG, Mengyang**
  **Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(54) **VECTOR RETRIEVAL METHOD AND APPARATUS**

(57) A vector search method and apparatus are provided, to resolve problems of a heavy computing workload and a slow searching speed that exist when an existing index created based on an IVF is used in a vector search process. In this application, the method includes: obtaining a to-be-queried vector; searching an index library for a first index corresponding to the to-be-queried vector, where the index library includes a plurality of indexes, each index corresponds to one first cluster, the first cluster includes a plurality of second clusters, each index records a first cluster center vector and a plurality of second cluster center vectors, feature vectors corresponding to the first cluster are clustered by using the first cluster center vector, and feature vectors corresponding to each second cluster are clustered by using each second cluster center vector; searching the first index for a second cluster center vector corresponding to the to-be-queried vector; finding a second cluster corresponding to the second cluster center vector based on the second cluster center vector; and searching a plurality of feature vectors included in the second cluster for a target feature vector related to the to-be-queried vector.

EP 4 492 259 A1

901: A computing device 20 obtains a to-be-queried vector

↓

902: The computing device 20 selects a target feature vector related to the to-be-queried vector from a feature library based on the to-be-queried vector and an index library

(1): The computing device 20 searches the index library for a first index corresponding to the to-be-queried vector

↓

(2): The computing device 20 searches the first index for a second cluster center vector corresponding to the to-be-queried vector

↓

(3): The computing device 20 finds, based on the second cluster center vector corresponding to the to-be-queried vector, a second cluster (which may be referred to as a second candidate cluster) corresponding to the second cluster center vector corresponding to the to-be-queried vector

↓

(4): The computing device 20 searches a plurality of feature vectors included in the second candidate cluster for the target feature vector

FIG. 9

2

## Description

This application claims priority to Chinese Patent Application No. 202210546971.0, filed with the China National Intellectual Property Administration on May 18, 2022 and entitled "VECTOR SEARCH METHOD AND APPARATUS", which is incorporated herein by reference in its entirety.

## TECHNICAL FIELD

This application relates to the field of computing technologies, and in particular, to a vector search method and apparatus.

## BACKGROUND

A vector search technology is widely applied to an artificial intelligence (artificial intelligence, AI) scenario. Specifically, externally collected data (such as a picture, a video, audio, and a text) may be first analyzed and processed by using a feature extraction means, to obtain a feature vector corresponding to each piece of data, and then these feature vectors are stored in a feature library. Further, an index of the feature library is created based on these feature vectors in the feature library. The feature library may need to be searched for a specific feature vector based on the created index of the feature library.

Inverted file system (inverted file system, IVF)-based vector search is one of common vector search technologies currently. Specifically, an index (that is, an IVF) of a feature library may be created based on feature vectors in the feature library, and during vector search, a specific feature vector is found from the feature library based on the IVF.

However, there are problems such as a heavy computing workload and a slow search speed in an IVF-based search process. In addition, as a data amount continuously increases, the IVF-based search speed may not meet service requirements.

## SUMMARY

This application provides a vector search method and apparatus, to resolve problems of a heavy computing workload and a slow searching speed that exist when an existing index created based on an IVF is used in a vector search process.

According to a first aspect, this application provides a vector search method. The method may be specifically performed by a computing device, or performed by a processor in the computing device. The method includes: obtaining a to-be-queried vector; searching an index library for a first index corresponding to the to-be-queried vector, where the index library includes a plurality of indexes, each index corresponds to one first cluster, the first cluster includes a plurality of second clusters, each index records a first cluster center vector and a plurality of second cluster center vectors respectively corresponding to the plurality of second clusters in the first cluster, feature vectors corresponding to the first cluster are clustered by using the first cluster center vector, and feature vectors corresponding to each second cluster are clustered by using each second cluster center vector; searching the first index for a second cluster center vector corresponding to the to-be-queried vector; finding a second cluster corresponding to the second cluster center vector based on the second cluster center vector; and searching a plurality of feature vectors included in the found second cluster for a target feature vector related to the to-be-queried vector.

In the foregoing technical solution, the index library includes the indexes respectively corresponding to a plurality of first clusters, and each index records a first cluster center vector and a plurality of second cluster center vectors. Correspondingly, during vector search, the computing device may first select, from the index library, the first index corresponding to the to-be-queried vector, then select, from the plurality of second cluster center vectors included in the first index, the second cluster center vector corresponding to the to-be-queried vector, and then select, from the second cluster corresponding to the selected second cluster center vector, the target feature vector related to the to-be-queried vector. In this way, the target feature vector is determined through multi-level vector search. This helps reduce a search computing workload and accelerate a search speed.

In a possible implementation, the searching an index library for a first index corresponding to the to-be-queried vector includes: comparing the to-be-queried vector with the first cluster center vectors recorded by the plurality of indexes in the index library, where a comparison result indicates that the first index meets a first preset condition.

In a possible implementation, the to-be-queried vector is M-dimensional, where M is a positive integer, and the feature vector in the second cluster is N-dimensional, where N is a positive integer, and N is less than M; and the searching a plurality of feature vectors included in the second cluster for a target feature vector related to the to-be-queried vector includes: performing dimension reduction from M dimensions to N dimensions on the to-be-queried vector, to obtain an N-dimensional to-be-queried vector through dimension reduction; and determining a similarity between the to-be-queried vector (that is, the N-dimensional to-be-queried vector) and each of the plurality of feature vectors (that is, N-dimensional feature vectors) in the second cluster; and selecting the target feature vector from the plurality of feature vectors based on the similarity.

In the foregoing technical solution, the computing device may first perform dimension reduction on an M-dimensional feature vector to obtain an N-dimensional feature vector, and then store the N-dimensional feature vector obtained through the dimension reduction. This helps reduce storage space occupied by feature vectors. Further, in a search process, the computing device may first perform dimension reduction on the M-dimensional to-be-queried vector to obtain the N-dimensional to-be-queried vector, to select the target feature vector from the plurality of N-dimensional feature vectors based on the similarity between the N-dimensional to-be-queried vector and each of the plurality of N-dimensional feature vectors. This helps reduce a computing workload in a search process, and further increases a search speed.

In a possible implementation, X first cluster center vectors are determined, and feature vectors in a feature library are clustered into X first clusters by using each of the X first cluster center vectors as a center; Y second cluster center vectors are selected from each of the X first clusters, and feature vectors in the first cluster are clustered into Y second clusters by using the Y second cluster center vectors as centers; and one index is generated for each first cluster, where the index is used to record the first cluster center vector and the second cluster center vectors corresponding to the first cluster center vector Quantities Y of second clusters included in the first clusters are the same or different. Both X and Y are positive integers.

In the foregoing technical solution, the index of the first cluster is determined by performing multi-level clustering on the feature vectors in the feature library. The index of the first cluster may be used in the vector search process. This helps reduce a search computing workload and accelerate a search speed.

In a possible implementation, determining the X first cluster center vectors may be specifically: clustering a preset proportion of the feature vectors (which may be referred to as training samples) in the feature library to obtain the X first clusters, and determining, based on feature vectors included in each first cluster, a first cluster center vector corresponding to the first cluster. Further, remaining feature vectors in the feature library are clustered into the X first clusters by using each of the X first cluster center vectors as the center

In a possible implementation, determining the Y second cluster center vectors may be specifically: clustering a preset proportion of the feature vectors in the first cluster to obtain the Y second clusters, and determining, based on feature vectors included in each second cluster, a second cluster center vector corresponding to the second cluster. Further, remaining feature vectors in the first cluster are clustered into the Y second clusters by using each of the Y second cluster center vectors as a center.

In a possible implementation, after that feature vectors in the first cluster are clustered into Y second clusters by using the Y second cluster center vectors as centers, the method further includes: selecting a third cluster from the Y second clusters, where a quantity of feature vectors in the third cluster is less than a threshold; determining a second cluster center vector closest to a second cluster center vector of the third cluster; and combining the feature vectors in the third cluster into a second cluster corresponding to the determined second cluster center vector.

In the foregoing technical solution, after the plurality of feature vectors in the first cluster are clustered to obtain the plurality of second clusters in the first cluster, the plurality of obtained second clusters may be further dynamically adjusted. To be specific, a second cluster that includes a small quantity of feature vectors is combined into a second cluster that includes a large quantity of feature vectors and that is closest to the second cluster that includes the small quantity of feature vectors, to avoid that, when a second cluster corresponding to a second cluster center vector is queried, the second cluster that includes the small quantity of feature vectors is found (or recalled). This helps improve precision of a determined second cluster.

In a possible implementation, after that feature vectors in a feature library are clustered into X first clusters by using each of the X first cluster center vectors as a center, the method further includes: performing the following operations on each feature vector in the feature library: selecting, from the X first clusters, a redundant cluster corresponding to the feature vector, where a similarity between the feature vector and a cluster center vector of the redundant cluster corresponding to the feature vector meets a preset redundancy condition; and selecting, from a plurality of feature vectors based on a similarity between each feature vector in the feature library and a cluster center vector of a redundant cluster corresponding to the feature vector, a redundant feature vector that requires redundant storage, so that a redundant cluster corresponding to the redundant feature vector includes the redundant feature vector.

In the foregoing technical solution, the redundant storage is performed on the redundant feature vector, so that the redundant feature vector can be obtained (or recalled) by using a plurality of second clusters. This helps improve a probability of obtaining (or recalling) the redundant feature vector.

In a possible implementation, the feature vector in the second cluster is an M-dimensional feature vector, where M is a positive integer, and the method further includes: performing dimension reduction on each M-dimensional feature vector in the second cluster, to obtain an N-dimensional feature vector corresponding to the M-dimensional feature vector, where N is a positive integer and is less than M; and storing an N-dimensional feature vector corresponding to each M-dimensional feature vector in the second cluster

In the foregoing technical solution, the dimension reduction is first performed on the M-dimensional feature vector, to obtain the N-dimensional feature vector corresponding to the M-dimensional feature vector. This helps reduce the storage space occupied for storing the feature vectors. Further, in the vector search process, a computing workload of similarity computing is reduced. In addition, the clustering is first performed on the feature vectors in the feature library, and then the dimension reduction is performed on the M-dimensional feature vector. This helps ensure clustering accuracy. Moreover, a quantity of feature vectors in the second cluster after the clustering is small, so that a problem that searching accuracy is reduced due to vector dimension reduction is avoided.

According to a second aspect, an embodiment of this application provides a vector search apparatus. The apparatus has functions of implementing the method in any one of the first aspect or the possible implementations of the first aspect. The apparatus may be a computing device, or may be a processor included in the computing device.

The functions of the foregoing vector search apparatus may be implemented by hardware, or may be implemented by hardware executing corresponding software. The hardware or software includes one or more modules, units, or means (means) corresponding to the foregoing functions.

In a possible implementation, a structure of the apparatus includes a processing module and a transceiver module. The processing module is configured to support the apparatus in performing the method in any one of the first aspect or the implementations of the first aspect. The transceiver module is configured to support communication between the apparatus and another apparatus, for example, may receive data from a collection device. The vector search apparatus may further include a storage module. The storage module is coupled to the processing module, and stores program instructions and data that are necessary for the apparatus. In an example, the processing module may be a processor, the transceiver module may be a transceiver, and the storage module may be a storage. The storage may be integrated with the processor, or may be disposed separately from the processor.

In another possible implementation, a structure of the apparatus includes a processor, and may further include a storage. The processor is coupled to the storage, and may be configured to execute computer program instructions stored in the storage, so that the apparatus performs the method in any one of the first aspect or the possible implementations of the first aspect. Optionally, the apparatus further includes a communication interface, and the processor is coupled to the communication interface. When the apparatus is a computing device, the communication interface may be a transceiver or an input/output interface.

According to a third aspect, an embodiment of this application provides a chip system, including a processor, where the processor is coupled to a storage, the storage is configured to store a program or instructions, and when the program or the instructions are executed by the processor, the chip system is enabled to implement the method in any one of the first aspect or the possible implementations of the first aspect.

Optionally, the chip system further includes an interface circuit, and the interface circuit is configured to exchange code instructions to the processor.

Optionally, there may be one or more processors in the chip system, and the processor may be implemented by hardware or software. When implemented by the hardware, the processor may be a logic circuit, an integrated circuit, or the like. When implemented by the software, the processor may be a general-purpose processor, and is implemented by reading software code stored in the storage.

Optionally, there may be one or more memories in the chip system. The storage may be integrated with the processor, or may be disposed separately from the processor. For example, the storage may be a non-transitory processor, for example, a read-only memory ROM. The storage and the processor may be integrated on a same chip, or may be separately disposed on different chips.

According to a fourth aspect, an embodiment of this application provides a computer-readable storage medium, storing a computer program or instructions. When the computer program or the instructions are executed, a computer is enabled to perform the method in any one of the first aspect or the possible implementations of the first aspect.

According to a fifth aspect, an embodiment of this application provides a computer program product. When a computer reads and executes the computer program product, the computer is enabled to perform the method in any one of the first aspect or the possible implementations of the first aspect.

For technical effects that can be achieved in any one of the second aspect to the fifth aspect, refer to descriptions of beneficial effects in the first aspect. Details are not described herein again.

## BRIEF DESCRIPTION OF DRAWINGS

FIG. 1 is a diagram of an architecture of a system according to this application;
FIG. 2 is a diagram of a structure of a computing device according to this application;
FIG. 3 is a diagram of a structure of a processor according to this application;

FIG. 4 is a schematic flowchart of a vector search technology according to this application;
FIG. 5 is a schematic flowchart of an index creation method according to this application;
FIG. 6 is a schematic flowchart of a redundant storage method according to this application;
FIG. 7 is a schematic flowchart of a feature dimension reduction storage method according to this application;
FIG. 8 is a diagram of obtaining a 64-dimensional feature vector through dimension reduction on a 256-dimensional feature vector according to this application;
FIG. 9 is a schematic flowchart of a vector search method according to this application; and
FIG. 10 is a schematic flowchart of another vector search method according to this application.

## DESCRIPTION OF EMBODIMENTS

To better explain this application, the following first explains related technologies or terms in this application.

1. Vector search technology: A vector similar to a to-be-queried vector is retrieved in a specific measurement manner in a given vector data set.

2. K-means clustering algorithm: The k-means clustering algorithm is a cluster analysis algorithm for iterative solution. Specifically, a class quantity k is given, and clustering is performed on an entire data set. A target function is a minimum sum of distances from all samples to a class center, and an optimization target function is calculated iteratively to obtain k class centers and a class to which each sample belongs.

3. K-nearestneighbor classification algorithm (k-nearestneighbor, KNN): A sample is most similar to K samples in a data set, and if most of the K samples belong to a class, the sample also belongs to this class.

4. Feature vector dimension reduction: A high-dimensional feature vector brings large computing costs, and has a disadvantage of difficult fitting because a large quantity of samples are required in feature training, and the like. Therefore, a feature vector dimension reduction manner may be used to increase a speed and a load of feature training. For example, in comparison with that each age represents one dimension, ages may be represented as several segments, namely, 0 to 10, 10 to 20, ..., and greater than 100. That is, the age is mapped to 11 dimensions.

5. FP32, FP16, and INT8:

In a computer language, FP32 represents a single-precision floating-point format, and correspondingly, FP16 is a half-precision floating-point format. Memory access consumption of FP16 is only 1/2 of memory access consumption of FP32.

INT8 is a fixed-point computing manner, represents an integer operation, and is generally quantized from a floating-point operation. In binary, one "0" or " 1" is one bit, and INT8 indicates that eight bits are used to represent a number. Therefore, although INT8 has lower precision than FP16, INT8 has a small amount of data, low power consumption, and a faster computing speed.

6. Inverted file system (inverted file system, IVF): For a plurality of feature vectors, all data is divided into nlist clusters (or referred to as buckets/groups/families) in a clustering manner. For searching of one feature vector, nlist times of searching may be performed first. To be specific, an input feature vector (or referred to as a to-be-queried vector) is compared with cluster center vectors (which are also feature vectors) of the nlist clusters, nprobe clusters with highest similarities to the input feature vector are found, and then similarity (or referred to as distance, similarity degree, or the like) comparison is performed on all feature vectors in the nprobe clusters.

7. Affine transformation: A linear transformation is performed on a space vector in geometry and is followed by a translation, to transform the space vector into another vector space.

8. Inner product (inner product, IP): The inner product is also referred to as a quantity product or dot product, and is a vector operation, but a result of the inner product is a specific value instead of a vector.

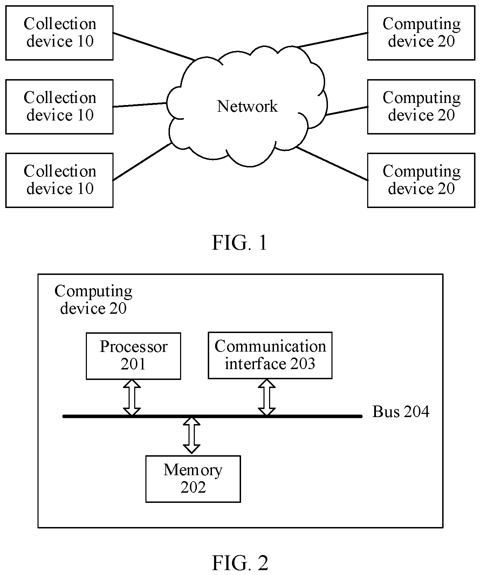

FIG. 1 is a diagram of an architecture of a possible system. The system includes a collection device 10 and a computing device 20. There may be one or more collection devices 10, and there may be one or more computing devices 20. The one or more collection devices 10 and the one or more computing devices 20 may be connected via a network.

The collection device 10 may be configured to collect data, and send the collected data to the computing device 20 via the network. The collection device 10 may be specifically a camera, a mobile phone, a computer, or the like. The data collected by the collection device 10 may be specifically data such as a picture, a video, audio, or a text. For example, in a video surveillance scenario, the collection device 10 may be specifically a camera, and data collected by the camera is, for example, a picture and/or a video shot by the camera.

The computing device 20 may receive and store the data sent by the collection device 10. In addition, the computing device 20 may further perform feature extraction on the data to obtain a feature vector corresponding to the data, generate an index based on the feature vector corresponding to the data, perform a data search process based on the generated index, and obtain corresponding data through searching.

Further, FIG. 2 is a diagram of a structure of a possible computing device 20. The computing device 20 includes a processor 201, a storage 202, and a communication interface 203. Any two of the processor 201, the storage 202, and the communication interface 203 may be connected through a bus 204.

The processor 201 may be a central processing unit (central processing unit, CPU). The CPU may be configured to execute a software program in the storage 202 to implement one or more functions, for example, feature extraction on data. In addition to the CPU, the processor 201 may be an application-specific integrated circuit (application-specific integrated circuit, ASIC), a field programmable gate array (field programmable gate array, FPGA), a system on a chip (system on a chip, SoC), a complex programmable logic device (complex programmable logic device, CPLD), a graphics processing unit (graphics processing unit, GPU), a neural-network accelerator (neural-network processing unit, NPU), or the like.

It should be noted that, during actual application, there may be a plurality of processors 201. The plurality of processors 201 may include a plurality of processors of a same type, or may include a plurality of processors of different types. For example, the plurality of processors 201 are a plurality of CPUs. For another example, the plurality of processors 201 include one or more CPUs and one or more GPUs. For another example, the plurality of processors 201 include one or more CPUs and one or more NPUs. Alternatively, the plurality of processors 201 include one or more CPUs, one or more GPUs, one or more NPUs, and the like. The processor 201 (for example, a CPU or an NPU) may include one core, or include a plurality of cores.

The storage 202 is an apparatus configured to store data, and may be a memory or a hard disk.

The memory is an internal storage that directly exchanges data with the processor 201. The memory can read and write data at any time at a high speed, and is used as a temporary data storage of an operating system running on the processor 201 or another running program. The memory includes a volatile memory (volatile memory), for example, a random access memory (random access memory, RAM) or a dynamic random access memory (dynamic random access memory, DRAM), may include a non-volatile memory (non-volatile memory), for example, a storage class memory (storage class memory, SCM), or may include a combination of a volatile memory and a non-volatile memory, or the like. During actual application, a plurality of memories may be configured in the computing device 20. Optionally, the plurality of memories may be of different types. A quantity of memories and a type of the memory are not limited in this embodiment. In addition, the memory may be configured to have a power protection function. The power protection function means that data stored in the memory is not lost when a system is powered off and then powered on again. The memory having the power protection function is referred to as a non-volatile memory.

The hard disk is configured to provide a storage resource, for example, configured to store data such as a picture, a video, audio, and a text collected by a collection device 10. The hard disk includes but is not limited to a non-volatile memory (non-volatile memory), for example, a read-only memory (read-only memory, ROM), a hard disk drive (hard disk drive, HDD), or a solid-state drive (solid-state drive, SSD). Different from the memory, the hard disk has a slow read/write speed and is usually used to store data persistently. In an implementation, data, program instructions, and the like in the hard disk need to be first loaded into the memory, and then the processor obtains the data and/or the program instructions from the memory.

The communication interface 203 is configured to communicate with another device, for example, is used by the computing device 20 to communicate with the collection device 10.

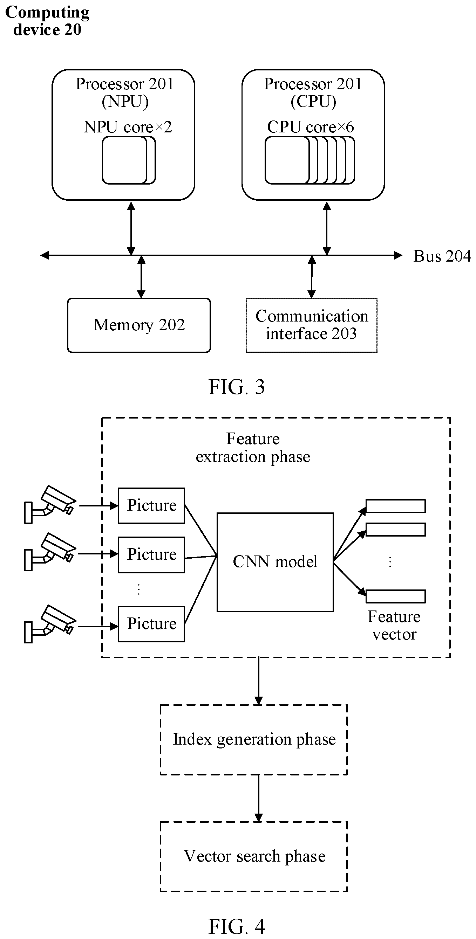

During actual application, the computing device 20 may include two types of processors 201. The two types of processors 201 may be respectively a CPU and an NPU. The CPU may include six CPU cores, the NPU may include two NPU cores, and the NPU core may also be referred to as an AI core. Computing power of the NPU is higher than computing power of the CPU. The CPU may be configured to perform similarity sorting and the like in a data search process. The NPU may be configured to perform similarity computing and the like in the data search process. For details, refer to a structure of a processor 201 in a computing device 20 shown in FIG. 3.

This application provides an example of a schematic flowchart of applying a vector search technology to an AI scenario (which may be specifically a surveillance scenario). For the schematic flowchart, refer to FIG. 4. Specifically, the procedure may be specifically executed by the computing device 20 shown in FIG. 1 to FIG. 3, and the procedure may be divided into the following three phases.

1. Feature extraction phase

The computing device 20 may obtain a plurality of pictures shot by collection devices 10 (a plurality of cameras in FIG. 4), and input each picture to a preset convolutional neural network (convolutional neural network, CNN) model, so that the CNN model outputs a feature vector (or referred to as a picture feature) corresponding to the picture. Subsequently, the computing device 20 stores, in a feature library, a feature vector corresponding to each picture. The feature library may be specifically located in a storage 202.

2. Index generation phase

The computing device 20 clusters (which may also be referred to as aggregates) feature vectors in the feature library by using a k-means clustering algorithm, to obtain nlist clusters. Each of the nlist clusters may correspond to a cluster center vector (which may also be referred to as a cluster center) of the cluster.

In a specific implementation, the computing device 20 may first randomly select a preset proportion (for example, about 10%) of the feature vectors from the feature library as training samples, and cluster the training samples based on the k-means clustering algorithm, to obtain the nlist clusters. Then, the computing device 20 groups, based on each cluster center vector of the nlist clusters, a feature vector other than the training sample in the feature library into a cluster corresponding to a cluster center vector closest to the cluster center vector.

As described above, the computing device 20 may obtain a cluster to which each feature vector in the feature library belongs, and generate an index of the cluster based on a cluster identifier of the cluster, a cluster center vector of the cluster, and an identifier of a feature vector included in the cluster. Further, the nlist clusters corresponding to the feature library respectively correspond to nlist indexes, and the computing device 20 may form an index of the feature library by using the nlist indexes. The index of the feature library may also be referred to as a feature library index or an index library.

3. Vector search phase

The computing device 20 selects a target feature vector from all feature vectors in the feature library based on a to-be-queried vector and the index library. Specifically, a vector search process may be divided into two parts: determining a cluster and determining a feature vector.

In a process of determining the cluster:
The computing device 20 compares the to-be-queried vector with each of the cluster center vectors of the nlist clusters, and selects nprobe clusters from the nlist clusters based on a comparison result. For example, the computing device 20 determines a similarity between the to-be-queried vector and each of the cluster center vectors of the nlist clusters, to obtain nlist similarities. The computing device 20 selects first nprobe similarities from the nlist similarities sorted in descending order, and uses clusters corresponding to the first nprobe similarities as the nprobe clusters.

In a process of determining the feature vector:
The computing device 20 compares the to-be-queried vector with all feature vectors in the nprobe clusters, and selects K nearest feature vectors from all the feature vectors in the nprobe clusters based on a comparison result.

Each of the nprobe clusters may include a plurality of feature vectors. For example, the nprobe clusters include mprobe feature vectors in total. The computing device 20 determines a similarity between the to-be-queried vector and each of the feature vectors in the nprobe clusters, to obtain mprobe similarities, further selects first K similarities from the mprobe similarities sorted in descending order, and then uses feature vectors corresponding to the first K similarities as K nearest feature vectors (namely, KNN results), where K is a positive integer. The KNN results are returned as searching results.

Herein, the to-be-queried vector (which may also be referred to as a query vector) may be a specific feature vector input by a user, or may be any feature vector in the feature library. In the latter case, it may be understood that the computing device 20 may traverse each feature vector in the feature library, and determine K nearest feature vectors of each feature vector. In this way, the computing device 20 can obtain KNN results of all the feature vectors in the feature library.

It may be understood that, it is assumed that quantities of feature vectors in all clusters are the same, and a total computing workload of the computing device 20 in the vector search phase may be represented as

$$O(nlist) + O\left(\frac{N}{nlist} \times nprobe\right),$$

where N is a total quantity of the feature vectors in the feature library. Further, as the total quantity of the feature vectors in the feature library continuously increases, the computing workload of the computing device 20 in the vector search phase also gradually increases, and a query speed becomes increasingly slow.

Therefore, this application provides an index creation method, to resolve problems of a heavy computing workload and a slow searching speed that exist when an existing index created based on space division (for example, an IVF) is used in the vector search phase.

In the index creation method provided in this application, the computing device 20 may perform multi-level clustering on a plurality of feature vectors in the feature library, and each level of clustering may implement clustering of a plurality of feature vectors in a current cluster into a plurality of lower-level clusters.

For example, the computing device 20 performs first-level clustering on a plurality of feature vectors in the feature library to obtain a plurality of first-level clusters. Each of the plurality of first-level clusters may include a plurality of feature vectors. Further, the computing device 20 may perform second-level clustering on a plurality of feature vectors in one first-level cluster (that is, a current cluster) to obtain a plurality of second-level clusters.

For ease of description, the current cluster may be referred to as a first cluster, and a lower-level cluster corresponding to the first cluster is referred to as a second cluster. That is, the first cluster may correspond to a plurality of second clusters.

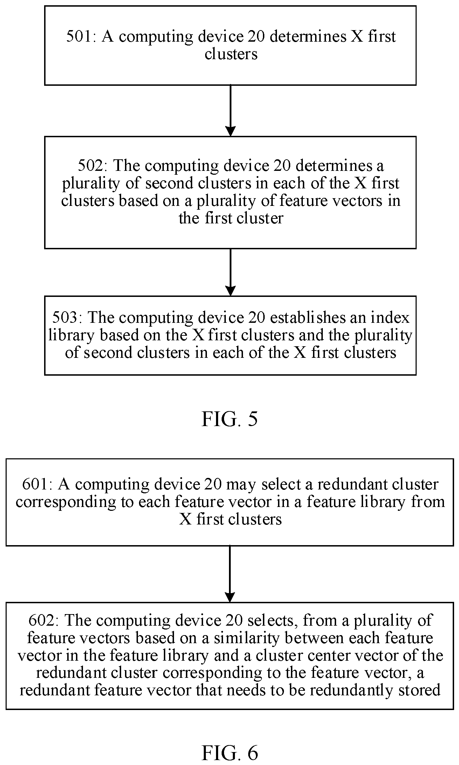

Refer to an example of explanations of a flowchart of an index creation method shown in FIG. 5.

Step 501: A computing device 20 determines X first clusters.

Specifically, the computing device 20 may determine the X first clusters based on a first clustering algorithm and a plurality of feature vectors in a feature library, where X is a positive integer. Each of the X first clusters includes a plurality of feature vectors. The first clustering algorithm is, for example, a k-means clustering algorithm or a fuzzy c-means clustering algorithm (fuzzy c-means algorithm, FCMA).

For example, the computing device 20 may obtain X' first-level clusters by performing first-level clustering on the plurality of feature vectors in the feature library, where X' is a positive integer. Quantities of feature vectors in a part of the X' first-level clusters may be small, and the computing device 20 does not need to perform next-level clustering on the part of first-level clusters. However, because quantities of feature vectors in the other part of first-level clusters are large, the computing device 20 needs to perform next-level clustering on the other part of first-level clusters. Certainly, this application does not exclude that the computing device 20 needs to perform next-level clustering on all the foregoing first-level clusters. In other words, the X first clusters may be all or a part of the X' first-level clusters obtained through the first-level clustering.

For another example, second-level clustering is performed on a plurality of feature vectors in a first-level cluster to obtain X' second-level clusters. The X first clusters may be all or a part of the X' second-level clusters. Certainly, the X first clusters may alternatively be a part or all of X' clusters obtained through another level of clustering. Details are not listed in this application.

There may be the following two implementations in which the computing device 20 determines X' first clusters based on the first clustering algorithm and the plurality of feature vectors in the feature library.

Implementation 1: The computing device 20 clusters the plurality of feature vectors in the feature library based on the first clustering algorithm, to directly obtain the X' first clusters, and then the computing device 20 determines, based on feature vectors in each of the X' first clusters, a cluster center vector (which may be referred to as a first cluster center vector) of the first cluster

Implementation 2: The computing device 20 randomly selects (or samples) a preset proportion (for example, about 10%) of the feature vectors from the feature library as first training samples, and performs clustering based on the first clustering algorithm and the first training samples to obtain the X' first clusters. Then, the computing device 20 determines, based on feature vectors in each of the X' first clusters, a first cluster center vector of the first cluster. The computing device 20 clusters, by using each of X' first cluster center vectors as a center, feature vectors other than the first training samples in the feature library into the X' first clusters. In this way, a computing workload of determining the first cluster center vector by the computing device 20 can be reduced, and the first cluster center vector can be determined quickly.

It may be understood that, when the computing device 20 determines the X first clusters, reference may be made to the foregoing implementation 1 and implementation 2, and the computing device 20 may replace the "X' first clusters" with the "X first clusters". Details are not described again.

Step 502: The computing device 20 determines a plurality of second clusters in each of the X first clusters based on a plurality of feature vectors in the first cluster.

Any one of the X first clusters is used as an example for description. The computing device 20 clusters a plurality of feature vectors in the first cluster based on a second clustering algorithm, to obtain Y second clusters corresponding to the first cluster, where Y is a positive integer. The second clustering algorithm is, for example, a k-means clustering algorithm or a fuzzy c-means clustering algorithm, and the first clustering algorithm is the same as or different from the second clustering algorithm. Quantities Y of second clusters obtained by the first clusters through division may be the same or different. For example, in the X first clusters, one first cluster obtains five second clusters through division, and another first cluster obtains 10 second clusters through division.

There may be the following implementation 1 and implementation 2 in which the computing device 20 determines the Y second clusters based on the second clustering algorithm and the plurality of feature vectors in the first cluster.

Implementation 1: The computing device 20 clusters the plurality of feature vectors in the first cluster based on the second clustering algorithm, to directly obtain the Y second clusters, and then the computing device 20 determines a cluster center vector (which may be referred to as a second cluster center vector) of each of the Y second clusters based on feature vectors in the second cluster

Implementation 2: The computing device 20 randomly selects a preset proportion (for example, about 10%) of the feature vectors from the first cluster as second training samples, and performs clustering based on the second clustering algorithm and the second training samples to obtain the Y second clusters. Then, the computing device 20 determines, based on feature vectors in each of the Y second clusters, a second cluster center vector corresponding to the second cluster. The computing device 20 clusters, by using each of Y second cluster center vectors as a center, feature vectors other than the second training samples in the first cluster into the Y second clusters. In this way, a computing workload of determining the second cluster center vector by the computing device 20 can be reduced, and the second cluster center vector can be determined quickly.

Further, the computing device 20 may first determine the quantity Y of second clusters corresponding to the first cluster, and then cluster the plurality of feature vectors in the first cluster based on the quantity Y of second clusters and the second clustering algorithm, to obtain the Y second clusters.

When determining the quantity Y of second clusters corresponding to the first cluster, the computing device 20 may specifically determine the quantity based on a quantity of feature vectors in the first cluster. It may be considered that a larger quantity of feature vectors in the first cluster indicates a larger quantity Y of second clusters corresponding to the first cluster. Alternatively, the computing device 20 may further determine the quantity Y of second clusters corresponding to the first cluster based on a quantity of feature vectors in the first cluster and a hardware condition. The hardware condition includes computing power of a processor 201 that runs the algorithm in the computing device 20. The computing power of the processor 201 is, for example, a size (size) and a quantity of matrix operation units included in the processor 201.

For example, the processor 201 is an NPU, and a size of a matrix operation unit in the NPU is $16 \times 16$. That is, the matrix operation unit may calculate a $16 \times 16$ matrix each time. The computing device 20 may determine that a quantity of feature vectors included in the second cluster is a multiple of 16. For example, the computing device 20 determines that the quantity of feature vectors included in the second cluster is 64. Further, for example, a quantity of feature vectors in the current first cluster is 640. In this case, the computing device 20 may assume that 640 feature vectors are evenly grouped into the second clusters, to obtain the quantity Y of second clusters. That is, Y is equal to 10.

As described above, the quantity of second clusters in the first cluster is determined based on the quantity of feature vectors in the first cluster or based on the quantity of feature vectors in the first cluster and the hardware condition. This helps improve clustering flexibility.

In addition, after clustering, based on the quantity Y of second clusters and the second clustering algorithm, the plurality of feature vectors in the first cluster to obtain the Y second clusters, the computing device 20 may further dynamically adjust the Y second clusters.

For example, a threshold (denoted as a quantity threshold) of the quantity of feature vectors in the second cluster is preset in the computing device 20. The computing device 20 selects one or more third clusters from the Y second clusters based on the quantity threshold, where a quantity of feature vectors in the third cluster is less than the quantity threshold. The computing device 20 may compute a similarity between a cluster center vector of one third cluster and a cluster center vector of each of second clusters other than the third cluster, and then select a second cluster with a highest similarity from the second clusters other than the third cluster. The computing device 20 combines feature vectors in the third cluster into the selected second cluster, to form a new second cluster. In this way, the computing device 20 determines Y' second clusters, where Y' is a positive integer, and Y' is less than Y

For example, when performing clustering on a first cluster (denoted as a cluster 1), the computing device 20 determines that a value of the quantity Y of second clusters corresponding to the cluster 1 is 5, and clusters a plurality of feature vectors in the cluster 1 to obtain five second clusters, where the five second clusters may be respectively denoted as a cluster 1-1 to a cluster 1-5. The cluster 1-1 to the cluster 1-5 respectively include 300 feature vectors, 200 feature vectors, 200 feature vectors, 10 feature vectors, and 20 feature vectors. It is assumed that a value of the quantity threshold is 150. In this case, both the cluster 1-4 and the cluster 1-5 are the third cluster. Further, the cluster 1-4 is closest to the cluster 1-1, and the computing device 20 may combine 10 feature vectors in the cluster 1-4 into the cluster 1-1. The cluster 1-5 is closest to the cluster 1-2, and the computing device 20 may combine 20 feature vectors in the cluster 1-5 into the cluster 1-2. In other words, a value of Y' is 3, the computing device 20 divides the first cluster to obtain three second clusters: the cluster 1-1 to the cluster 1-3. The cluster 1-1 includes 310 feature vectors, the cluster 1-2 includes 220 feature vectors, and the cluster 1-3 includes 200 feature vectors.

In the foregoing technical solution, after the plurality of feature vectors in the first cluster are clustered to obtain the plurality of second clusters in the first cluster, the plurality of second clusters may be further dynamically adjusted. To be specific, a second cluster that includes a small quantity of feature vectors is combined into a second cluster that includes a large quantity of feature vectors and that is closest to the second cluster that includes the small quantity of feature vectors. This helps improve query precision.

It should be noted that, in this application, the computing device 20 may further dynamically adjust a cluster obtained through another level of clustering, for example, dynamically adjust a first-level cluster obtained through the first-level clustering. Details are not described again.

In this way, the computing device 20 can complete clustering of each of the X first clusters, to obtain Y second clusters respectively corresponding to each of the X first clusters. For example, the computing device 20 determines that the X first clusters are represented as the cluster 1 to a cluster X. Three second clusters included in the cluster 1 are respectively represented as the cluster 1-1 to the cluster 1-3, two second clusters included in a cluster 2 are respectively represented as a cluster 2-1 and a cluster 2-2, four second clusters included in a cluster 3 are respectively represented as a cluster 3-1 to a cluster 3-4, and so on.

Step 503: The computing device 20 establishes an index library based on the X first clusters and the plurality of second clusters in each of the X first clusters.

It is noted in advance that the second cluster may be considered as a cluster corresponding to last-level clustering in multi-level clustering. For example, if the computing device 20 performs three-level clustering on the feature vectors in the feature library, the second cluster is a cluster corresponding to third-level clustering in the three-level clustering, and the first cluster is a cluster corresponding to second-level clustering in the three-level clustering. For another example, if the computing device 20 performs two-level clustering on the feature vectors in the feature library, the second cluster is a cluster corresponding to second-level clustering in the two-level clustering, and the first cluster is a cluster corresponding to first-level clustering in the two-level clustering. A quantity of levels of clustering performed by the computing device 20 on the feature vectors in the feature library may be greater than or equal to 2, and a specific quantity of levels may be determined based on a total quantity of the feature vectors in the feature library and/or a hardware condition.

After determining a plurality of second clusters in each of the X first clusters, the computing device 20 may generate an index library based on cluster identifiers and cluster center vectors (namely, first cluster center vectors) of the X first clusters, cluster identifiers and cluster center vectors (namely, second cluster center vectors) of a plurality of second clusters in each first cluster, and feature vectors in each second cluster.

The following describes two cases based on the quantity of levels of clustering performed by the computing device 20 on the feature vectors in the feature library.

Case 1: The computing device 20 performs two-level clustering on the feature vectors in the feature library.

It may be understood that a first cluster herein is the first-level cluster, and a second cluster is the second-level cluster.

The computing device 20 may first determine an index of each of X first-level clusters based on a cluster identifier and a cluster center vector of the first-level cluster, cluster identifiers and cluster center vectors of a plurality of second-level clusters in the first-level cluster, and identifiers of feature vectors in each second-level cluster, to obtain indexes of the X first-level clusters. Then, the computing device 20 forms an index library by using the indexes of the X first-level clusters.

An example in which the computing device 20 determines a cluster 1 to a cluster X (that is, the X first-level clusters) is used for description.

For an index of the cluster 1 generated by the computing device 20, refer to Table 1. A cluster identifier of the cluster 1 is represented as a "cluster 1", a cluster center vector of the cluster 1 is represented as a "cluster center vector 1", and the cluster 1 includes a cluster 1-1 to a cluster 1-3. A cluster identifier of the cluster 1-1 is represented as a "cluster 1-1", a cluster center vector of the cluster 1-1 is represented as a "cluster center vector 1-1", and the cluster 1-1 includes 100 feature vectors, represented as "feature vectors 1 to 100", and the like.

**Table 1**

| First-level cluster | | Second-level cluster | | Feature vector |
|---|---|---|---|---|
| Cluster identifier | Cluster center vector | Cluster identifier | Cluster center vector | |
| Cluster 1 | Cluster center vector 1 | Cluster 1-1 | Cluster center vector 1-1 | Feature vectors 1 to 100 |
| | | Cluster 1-2 | Cluster center vector 1-2 | Feature vectors 101 to 200 |
| | | Cluster 1-3 | Cluster center vector 1-3 | Feature vectors 201 to 300 |

The computing device 20 may further generate indexes of other first clusters (that is, the cluster 2 to the cluster X), and form the index library by using the indexes of the cluster 1 to the cluster X. For details, refer to Table 2.

**Table 2**

| First-level cluster | | Second-level cluster | | Feature vector |
|---|---|---|---|---|
| Cluster identifier | Cluster center vector | Cluster identifier | Cluster center vector | |
| Cluster 1 | Cluster center vector 1 | Cluster 1-1 | Cluster center vector 1-1 | Feature vectors 1 to 100 |
| | | Cluster 1-2 | Cluster center vector 1-2 | Feature vectors 101 to 200 |
| | | Cluster 1-3 | Cluster center vector 1-3 | Feature vectors 201 to 300 |

(continued)

| First-level cluster | | Second-level cluster | | Feature vector |
|---|---|---|---|---|
| Cluster identifier | Cluster center vector | Cluster identifier | Cluster center vector | |
| Cluster 2 | Cluster center vector 2 | Cluster 2-1 | Cluster center vector 2-1 | Feature vectors 301 to 400 |
| | | Cluster 2-2 | Cluster center vector 2-2 | Feature vectors 401 to 500 |
| Cluster 3 | Cluster center vector 3 | Cluster 3-1 | Cluster center vector 3-1 | Feature vectors 501 to 600 |
| | | Cluster 3-2 | Cluster center vector 3-2 | Feature vectors 601 to 700 |
| | | Cluster 3-3 | Cluster center vector 3-3 | Feature vectors 701 to 800 |
| | | Cluster 3-4 | Cluster center vector 3-4 | Feature vectors 801 to 900 |
| ... | ... | ... | ... | ... |
| Cluster X | Cluster center vector X | Cluster X-1 | Cluster center vector X-1 | ... |
| | | ... | ... | ... |

Case 2: The computing device 20 performs multi-level (more than two levels) clustering on the feature vectors in the feature library.

It may be understood that the first cluster is obtained by the computing device 20 by clustering feature vectors in a specific cluster based on the first clustering algorithm. For example, when the computing device 20 performs three-level clustering on the feature vectors in the feature library, the computing device 20 first performs first-level clustering on the feature vectors in the feature library to obtain a plurality of first-level clusters, performs clustering on one of the first-level clusters to obtain a plurality of second-level clusters (that is, the X first clusters), and performs clustering on one of the second-level clusters (that is, the first cluster) to obtain a plurality of third-level clusters (that is, the Y second clusters).

In this case, the computing device 20 may first determine an index of each first-level cluster based on a cluster identifier and a cluster center vector of the first-level cluster, cluster identifiers and cluster center vectors (namely, the first cluster center vectors) of a plurality of second-level clusters in the first-level cluster, cluster identifiers and cluster center vectors (namely, the second cluster center vectors) of a plurality of third-level clusters in each second-level cluster, and identifiers of feature vectors in each third-level cluster. Then, the computing device 20 determines the index library based on indexes of the plurality of first-level clusters. A specific manner is similar to that in Case 1.

An example in which three first clusters determined by the computing device 20 are respectively the cluster 1 to the cluster 3 is still used for description. The cluster 1 to the cluster 3 are three second-level clusters, and an upper-level cluster of the cluster 1 to the cluster 3 is the first-level cluster. For example, the first-level cluster is a cluster 0. The index library generated by the computing device 20 is shown in Table 3. In comparison with Table 2, one level of index is added to Table 3.

**Table 3**

| First-level cluster | | Second-level cluster | | Third-level cluster | | Feature vector |
|---|---|---|---|---|---|---|
| Cluster identifier | Cluster center vector | Cluster identifier | Cluster center vector | Cluster identifier | Cluster center vector | |
| Cluster 0 | Cluster center vector 0 | Cluster 1 | Cluster center vector 1 | Cluster 1-1 | Cluster center vector 1-1 | Feature vectors 1 to 100 |
| | | | | Cluster 1-2 | Cluster center vector 1-2 | Feature vectors 101 to 200 |
| | | | | Cluster 1-3 | Cluster center vector 1-3 | Feature vectors 201 to 300 |
| | | Cluster 2 | Cluster center vector 2 | Cluster 2-1 | Cluster center vector 2-1 | Feature vectors 301 to 400 |
| | | | | Cluster 2-2 | Cluster center vector 2-2 | Feature vectors 401 to 500 |

(continued)

| First-level cluster | | Second-level cluster | | Third-level cluster | | Feature vector |
|---|---|---|---|---|---|---|
| Cluster identifier | Cluster center vector | Cluster identifier | Cluster center vector | Cluster identifier | Cluster center vector | |
| | | Cluster 3 | Cluster center vector 3 | Cluster 3-1 | Cluster center vector 3-1 | Feature vectors 501 to 600 |
| | | | | Cluster 3-2 | Cluster center vector 3-2 | Feature vectors 601 to 700 |
| | | | | Cluster 3-3 | Cluster center vector 3-3 | Feature vectors 701 to 800 |
| | | | | Cluster 3-4 | Cluster center vector 3-4 | Feature vectors 801 to 900 |
| | | ... | ... | ... | ... | ... |
| | | Cluster X | Cluster center vector X | Cluster X-1 | Cluster center vector X-1 | ... |
| | | | | ... | ... | ... |

Further, when the computing device 20 performs four-level, five-level, or more-level clustering on the feature vectors in the feature library, a manner of generating the index library is similar to that in Case 1. Details are not described again.

It should be noted that, in step 501, in addition to determining the X first clusters, the computing device 20 may further determine first clusters on which next-level clustering does not need to be performed. The computing device 20 may further generate indexes of these first clusters based on cluster center vectors of these first clusters and feature vectors in the first clusters, to generate the index library.

It should be further noted that, in any level of clustering of the foregoing multi-level clustering, for most feature vectors, a similarity between the feature vector and a cluster center vector of a cluster to which the feature vector belongs is significantly higher than a similarity between the feature vector and a cluster center vector of another cluster. In this way, the cluster to which the feature vector belongs can accurately represent the feature vector.

However, for some feature vectors, a similarity between the feature vector and a cluster center vector of a cluster to which the feature vector belongs is not much different from a similarity between the feature vector and a cluster center vector of another cluster. In this case, the feature vector needs to be bound to a plurality of clusters, to increase a probability that the feature vector is selected (or referred to as recalled) in a vector search process. This helps improve precision in the vector search process. For ease of description, the feature vector is referred to as a redundant feature vector, indicating that the feature vector needs to be redundantly stored.

The computing device 20 may select a redundant feature vector from all the feature vectors included in the feature library, to determine a redundant cluster corresponding to the redundant feature vector. This process may be referred to as a redundant storage process.

Further, the computing device 20 may execute the redundant stored process after performing any level of clustering of the multi-level clustering. An example in which the computing device 20 executes the redundant storage process after completing clustering corresponding to the first cluster is used for description below.

FIG. 6 shows an example of an implementation of a redundant storage process according to this application.

Step 601: A computing device 20 may select a redundant cluster corresponding to each feature vector in a feature library from X first clusters.

A similarity between the feature vector and a cluster center vector of the redundant cluster corresponding to the feature vector meets a preset redundancy condition.

In a specific implementation, after determining the X first clusters, the computing device 20 may determine a similarity between each feature vector and each of cluster center vectors of (X-1) first clusters other than a cluster to which the feature vector belongs, to obtain (X-1) similarities. The computing device 20 selects, based on the (X-1) similarities, the redundant cluster corresponding to the feature vector from the (X-1) first clusters other than the cluster to which the feature vector belongs.

The following provides two examples based on specific representation forms of the preset redundancy condition.

Example 1: The preset redundancy condition is specifically that a ratio of the similarity between the feature vector and the cluster center vector of the redundant cluster corresponding to the feature vector to a similarity (denoted as a reference similarity) between the feature vector and a cluster center vector of the cluster to which the feature vector belongs is greater than a first redundancy threshold. It may be understood that a larger similarity ratio indicates a larger similarity between the feature vector and the cluster center vector of the redundant cluster corresponding to the feature vector, that is, it is more necessary that the feature vector is redundantly stored in the redundant cluster corresponding to the feature vector.

Correspondingly, the computing device 20 may determine ratios of the (X-1) similarities to the reference similarity, to obtain (X-1) ratios. Then, the computing device 20 selects, from the (X-1) ratios, ratios greater than the first redundancy threshold, and determines first clusters corresponding to the selected ratios as redundant clusters corresponding to the feature vector.

Example 2: The preset redundancy condition is specifically that a ratio of the similarity between the feature vector and the cluster center vector of the redundant cluster corresponding to the feature vector to a similarity between the feature vector and a cluster center vector of the cluster to which the feature vector belongs is first h1 ratios of (X-1) ratios sorted in descending order, where h1 may also be considered as a preset threshold, and h1 is a positive integer. For an explanation of the ratio, refer to descriptions in Example 1.

Correspondingly, the computing device 20 may determine ratios of the (X-1) similarities to the reference similarity, to obtain the (X-1) ratios. Then, the computing device 20 selects the first h1 ratios from the (X-1) ratios sorted in descending order, and determines h1 first clusters corresponding to the h1 ratios as redundant clusters corresponding to the feature vector.

In addition, the preset redundancy condition may alternatively be specifically that the similarity between the feature vector and the cluster center vector of the redundant cluster corresponding to the feature vector is greater than a second redundancy threshold, so that the computing device 20 determines, based on the second redundancy threshold, h1 redundant clusters corresponding to the feature vector. Alternatively, the preset redundancy condition is specifically that similarities between the feature vector and cluster center vectors of redundant clusters corresponding to the feature vector are first h1 similarities of the (X-1) similarities sorted in descending order, and the computing device 20 determines, based on a descending order of the (X-1) similarities, h1 redundant clusters corresponding to the feature vector. For specific implementation, refer to the foregoing Example 1 and Example 2.

In this way, the computing device 20 may determine a redundant cluster corresponding to each feature vector in the feature library, and a similarity between the feature vector and a cluster center vector of the redundant cluster corresponding to the feature vector.

A further example is given with reference to Table 2 and Example 2. For example, h1 is equal to 2, the computing device 20 determines that redundant clusters corresponding to the feature vector 1 are the cluster 2 and the cluster 3, redundant clusters corresponding to the feature vector 2 are the cluster 3 and the cluster 4, and the like. Further, it is assumed that there are 20,000 feature vectors in total in the feature library. The computing device 20 may determine two redundant clusters corresponding to each of the 20,000 feature vectors, and two similarities between each of the 20,000 feature vectors and cluster center vectors of the two redundant clusters. That is, the computing device 20 determines 40,000 similarities in total.

Step 602: The computing device 20 selects, from a plurality of feature vectors based on a similarity between each feature vector in the feature library and a cluster center vector of the redundant cluster corresponding to the feature vector, a redundant feature vector that needs to be redundantly stored.

After obtaining the similarity between each feature vector in the feature library and the cluster center vector of the redundant cluster corresponding to the feature vector, the computing device 20 sorts these similarities in descending order. In an example, the computing device 20 selects first h2 similarities from these similarities sorted in descending order, and determines feature vectors corresponding to the first h2 similarities as redundant feature vectors, where h2 may be considered as a preset threshold, and h2 is a positive integer. In another example, the computing device 200 selects similarities of a proportion of top p % from these similarities sorted in descending order, and determines feature vectors corresponding to the selected similarities as redundant feature vectors, where p is a preset threshold, and p is a positive integer. Correspondingly, these redundant feature vectors need to be redundantly stored in a redundant cluster corresponding to the redundant feature vectors.

Further descriptions are provided with reference to the example in step 601. The computing device 20 may sort the 40,000 similarities in descending order, and select the first h2 similarities from the 40,000 similarities. For example, if a value of h2 is 5000, the computing device 20 may determine 5000 similarities, and further determine feature vectors (that is, redundant feature vectors) respectively corresponding to the 5000 similarities and redundant clusters corresponding to the feature vectors. For example, if the computing device 20 determines that a redundant feature vector and a redundant cluster are respectively the feature vector 1 and the cluster 2, it indicates that the feature vector 1 not only needs to be stored in the cluster 1, but also needs to be redundantly stored in the cluster 2.

It should be explained that a redundant feature vector is redundantly stored in the redundant cluster, which may be considered as that the computing device 20 not only groups the redundant feature vector into a cluster to which the redundant feature vector belongs, but also groups the redundant feature vector into a redundant cluster corresponding to the redundant feature vector. Therefore, when generating an index library, the computing device 20 may generate a relationship between the redundant feature vector and the redundant cluster corresponding to the redundant feature vector. For example, the computing device 20 determines that the redundant feature vector and the redundant cluster corresponding to the redundant feature vector are respectively the feature vector 1 and the cluster 2. For an index of the feature vector 1 in the index library generated by the computing device 20, refer to Table 4.

Certainly, Table 4 is merely an example for describing a function of the redundant storage. In this application, a form of the index library further needs to be understood with reference to Table 4 and the foregoing Table 1 to Table 3.

**Table 4**

| First-level cluster | | Feature vector |
|---|---|---|
| Cluster identifier | Cluster center vector | |
| Cluster 1 | Cluster center vector 1 | Feature vector 1 |
| Cluster 2 | Cluster center vector 2 | Feature vector 1 |

It should be further explained that the foregoing X first clusters may be stored in a storage 202 of the computing device 20. That is, each first cluster may occupy a part of total storage space. When the redundant storage is performed on a specific feature vector, the feature vector needs to be stored in a cluster to which the feature vector belongs, that is, stored in a part of storage space corresponding to the cluster to which the feature vector belongs; and the feature vector further needs to be stored in a redundant cluster corresponding to the feature vector, that is, stored in a part of storage space corresponding to the redundant cluster corresponding to the feature vector. It may be understood that, in a possible manner, the computing device 20 may determine, based on the total storage space and/or remaining storage space, a total quantity of redundant feature vectors and a total quantity of redundant clusters corresponding to the redundant feature vectors. In other words, the computing device 20 may determine, based on the total storage space and/or the remaining storage space, one or more of the foregoing first redundancy threshold, h1, h2, p%, and the second redundancy threshold. The storage space is, for example, memory in the storage 202.

A feature vector that needs to be redundantly stored most is determined from the feature library by using the foregoing redundant storage process, so that precision of the index library can be improved to a maximum extent while the storage space is used most properly.

It should be noted that the foregoing descriptions are provided by using an example in which the computing device 20 executes the redundant storage process after completing clustering corresponding to the first cluster. This application is further applicable to a scenario in which the computing device 20 executes the redundant storage process after completing another level of clustering. The "first cluster" in the foregoing embodiment may be replaced with a cluster obtained through another level of clustering. Details are not described again.

In addition, after executing the redundant storage process, the computing device 20 may further execute next-level clustering. For example, after grouping a redundant feature vector into a redundant cluster corresponding to the redundant feature vector, the computing device 20 performs next-level clustering on the redundant cluster including the redundant feature vector, and then further generates the index library.

An index library generation process and the redundant storage process are described above. In addition, this application further provides a feature storage method. Specifically, the computing device 20 may perform dimension reduction on a feature vector in each second cluster after multi-level clustering, that is, after step 502. Then, the computing device 20 stores the feature vector obtained through the dimension reduction in a part of storage space corresponding to a cluster to which the feature vector belongs. This helps reduce storage space occupation and reduce time consumption of data movement.

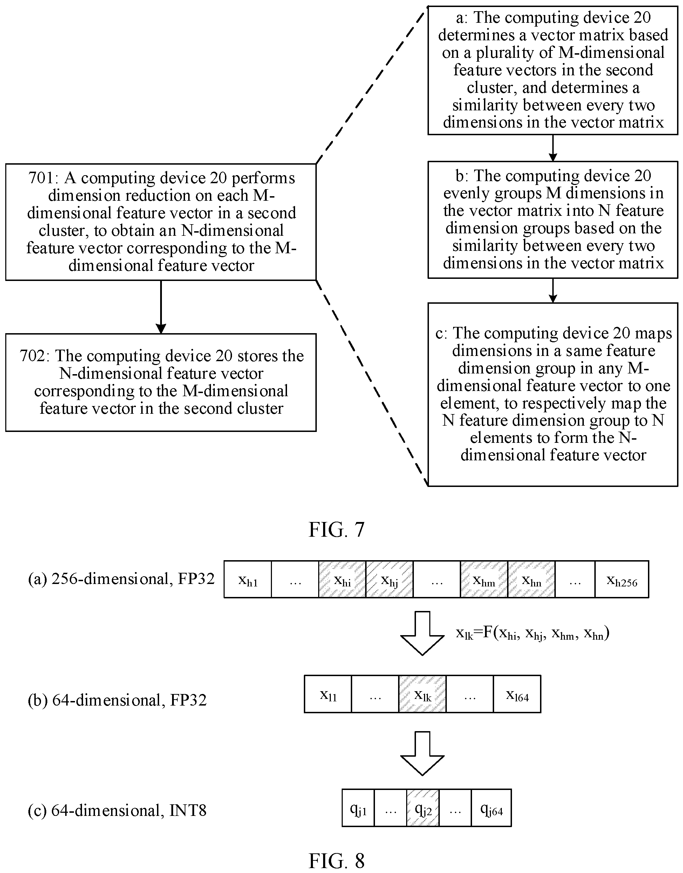

For details, refer to an example of a schematic flowchart of a feature storage method shown in FIG. 7.

Step 701: A computing device 20 performs dimension reduction on each M-dimensional feature vector in a second cluster, to obtain an N-dimensional feature vector corresponding to the M-dimensional feature vector.

Each feature vector in the second cluster is specifically an M-dimensional feature vector (that is, a high-dimensional feature vector), and M is, for example, equal to 256. The computing device 20 performs dimension reduction on each M-dimensional feature vector, to obtain the N-dimensional feature vector (that is, a low-dimensional feature vector) corresponding to each M-dimensional feature vector, where N is, for example, equal to 64 dimensions.

M and N are both positive integers, and N is less than M, or it is considered that M is an integer multiple of N.

A dimension reduction process is described as follows.

Step a: The computing device 20 determines a vector matrix based on a plurality of M-dimensional feature vectors in the second cluster, and determines a similarity between every two dimensions in the vector matrix.

For example, the second cluster includes J M-dimensional feature vectors in total, and the computing device 20 may form one vector matrix with J rows and M columns by using the J M-dimensional feature vectors. The computing device 20 determines, for every two columns (that is, every two dimensions) in the vector matrix, an inner product between the two dimensions based on J values included in each of the two dimensions, where the inner product may be used to measure a similarity between the two dimensions, and a larger similarity indicates that the two dimensions are closer. In this way, the computing device 20 may determine the similarity between every two dimensions in the vector matrix.

Step b: The computing device 20 evenly groups M dimensions in the vector matrix into N feature dimension groups based on the similarity between every two dimensions in the vector matrix.

That is, each feature dimension group may include M/N dimensions. With reference to the foregoing obtaining the 64-dimensional feature vector through dimension reduction on the 256-dimensional feature vector, it can be learned that each feature dimension group includes four dimensions.

The computing device 20 may traverse each of M dimensions. If the dimension is not grouped, the computing device 20 searches all other ungrouped dimensions for another three dimensions closest to the dimension to form one group. If the dimension has been grouped, the computing device 20 skips the dimension. The operation is performed until all dimensions are grouped into a feature dimension group, that is, N dimension groups are obtained.

It may be understood that, for each M-dimensional feature vector, M elements (that is, values) in the M-dimensional feature vector are also located in respective feature dimension groups. For example, a first dimension to a fourth dimension in the 256-dimensional feature vector are located in a first feature dimension group, a fifth dimension to an eighth dimension are located in a second feature dimension group, and so on.

Step c: The computing device 20 maps dimensions in a same feature dimension group in any M-dimensional feature vector to one element, to respectively map the N feature dimension groups to N elements to form the N-dimensional feature vector.

Specifically, the computing device 20 performs affine transformation calculation on M/N dimensions in one of the N feature dimension groups, to obtain one element. Subsequently, the computing device 20 may obtain N elements respectively corresponding to the N feature dimension groups, and form an N-dimensional feature vector by using the N elements. In this way, dimension reduction is performed on the M-dimensional feature vector to obtain the N-dimensional feature vector.

In addition, a data format of each M-dimensional feature vector in the second cluster is FP32. After performing dimension reduction on each M-dimensional feature vector, the computing device 20 also obtains an N-dimensional feature vector of FP32. To further reduce storage space occupation and reduce time consumption of data movement, the computing device 20 may quantize an original FP32 data format into an INT8 data format in a quantization manner, that is, obtain an N-dimensional feature vector of INT8, and store the N-dimensional feature vector of INT8.

FIG. 8 shows an example of a diagram of obtaining a 64-dimensional feature vector through dimension reduction on a 256-dimensional feature vector according to this application. For the 256-dimensional feature vector, refer to (a) of FIG. 8. Each square represents a value in the 256-dimensional feature vector.

The computing device 20 may select four dimensions with a high similarity to form a feature dimension group. For example, four shadow blocks in (a) of FIG. 8 represent four dimensions with a high similarity, namely, $x_{hi}$, $x_{hj}$, $x_{hm}$, and $x_{hn}$. The computing device 20 forms a feature dimension group by using $x_{hi}$, $x_{hj}$, $x_{hm}$, and $x_{hn}$, and performs affine transformation calculation on the feature dimension group to obtain an element $x_{lk}$, that is, a shadow block in (b) of FIG. 8. Similarly, obtaining the 64-dimensional feature vector by the computing device 20 through dimension reduction on the 256-dimensional feature vector is shown in (b) of FIG. 8.

The computing device 20 performs quantization processing on the 64-dimensional feature vector of FP32. The element $x_{lk}$ is still used as an example. The quantization processing is performed on the element $x_{lk}$ to obtain $q_{i2}$, that is, a shadow block in (c) of FIG. 8. Similarly, the computing device 20 quantizes the 64-dimensional feature vector of FP32 to obtain the N-dimensional feature vector of INT8. Refer to (c) of FIG. 8.

Step 702: The computing device 20 stores the N-dimensional feature vector corresponding to the M-dimensional feature vector in the second cluster

The computing device 20 stores the N-dimensional feature vector instead of storing the M-dimensional feature vector originally. This helps reduce storage space occupation and reduce time consumption of data movement. Further, the computing device 20 determines a vector matrix based on a plurality of M-dimensional feature vectors in the second cluster, and implements dimension reduction on each M-dimensional feature vector by computing an inner product between every two dimensions in the vector matrix. A dimension reduction manner is simple and a computing workload is small.

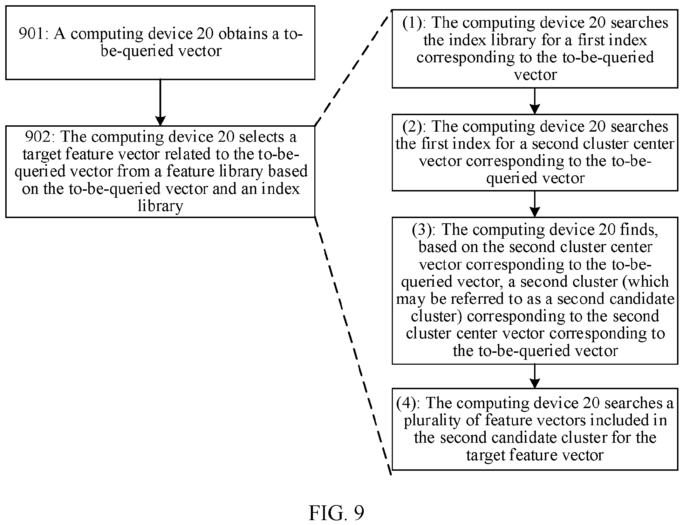

In addition, based on the foregoing generated index library, this application further provides a vector search method, to resolve problems of a heavy computing workload and a slow searching speed that exist when an existing index created based on space division (for example, an IVF) is used in a vector search process. In the vector search method, the computing device 20 may search a feature library for a target feature vector based on a to-be-queried vector and an index library. For details, refer to a flowchart of an example shown in FIG. 9.

Step 901: The computing device 20 obtains the to-be-queried vector.

The to-be-queried vector obtained by the computing device 20 may be specifically a specific feature vector input by a user to the computing device 20, so that the computing device 20 may return, to the user, a target feature vector corresponding to the feature vector.

Alternatively, the to-be-queried vector obtained by the computing device 20 may be specifically any feature vector in the feature library. To be specific, the computing device 20 may traverse each feature vector in the feature library, determine a target feature vector corresponding to each feature vector, and record the target feature vector corresponding to the feature vector. For example, the computing device 20 may determine K nearest feature vectors (namely, KNN results) of each feature vector, and record KNN results of all feature vectors in the feature library. In this way, when the user needs to query for a target feature vector corresponding to a specific feature vector, the target feature vector (for example, a KNN result) corresponding to the feature vector may be directly returned based on a record. This helps improve vector search efficiency.

Step 902: The computing device 20 selects, from the feature library based on the to-be-queried vector and the index library, a target feature vector related to the to-be-queried vector.

The index library is specifically the index library generated in the foregoing embodiments related to FIG. 5 and FIG. 6. The index library includes indexes of a plurality of first clusters, and the index of each first cluster further includes a cluster identifier and a cluster center vector (namely, a first cluster center vector) of the first cluster, cluster identifiers and cluster center vectors (namely, second cluster center vectors) of a plurality of second clusters in the first cluster, and feature vectors in each second cluster. For a specific representation form of the index library, refer to descriptions in Table 1 to Table 4.

A manner in which the computing device 20 selects the target feature vector is described below with reference to step (1) to step (4).

Step (1): The computing device 20 searches the index library for a first index corresponding to the to-be-queried vector.

Optionally, the computing device 20 compares the to-be-queried vector with the first cluster center vectors recorded by the plurality of indexes in the index library, and a comparison result indicates that the first index meets a first preset condition.

In a specific implementation, the computing device 20 may obtain n first cluster center vectors respectively recorded by the n indexes in the index library, and determine n similarities respectively between the to-be-queried vector and the n first cluster center vectors. The computing device 20 selects, from the n indexes based on the n similarities respectively between the to-be-queried vector and the n first cluster center vectors, the first index corresponding to a similarity meeting the first preset condition, where a first cluster corresponding to the first index may be referred to as a first candidate cluster.

The first preset condition may be specifically that the similarity between the first cluster center vector and the to-be-queried vector is greater than a first similarity threshold. Alternatively, the first preset condition may be specifically first K1 similarities of the similarities that are between the to-be-queried vector and the n first cluster center vectors and that are sorted in descending order, where K1 is a positive integer.

Step (2): The computing device 20 searches the first index for a second cluster center vector corresponding to the to-be-queried vector.

There may be one or more first indexes, and each first index may include cluster center vectors (namely, second cluster center vectors) of a plurality of second clusters. For example, after determining the one or more first indexes, the computing device 20 may determine m second cluster center vectors from the one or more first indexes. With reference to the example in Table 2, for example, indexes of the cluster 1 and the cluster 2 are both first indexes, and the computing device 20 may determine three second cluster center vectors from the index of the cluster 1, that is, the cluster center vector 1-1, the cluster center vector 1-2, and the cluster center vector 1-3; and the computing device 20 may further determine two second cluster center vectors from the index of the cluster 2, that is, the cluster center vector 2-1 and the cluster center vector 2-2, where m=5.

Further, the computing device 20 determines a similarity between the to-be-queried vector and each of the m second cluster center vectors. The computing device 20 selects, from the m second cluster center vectors based on the similarity between the to-be-queried vector and each of the m second cluster center vectors, a second cluster center vector that meets a second preset condition as the second cluster center vector corresponding to the to-be-queried vector.

The second preset condition may be specifically that the similarity between the second cluster center vector and the to-be-queried vector is greater than a second similarity threshold. For example, the second similarity threshold is greater than the first similarity threshold. Alternatively, the second preset condition may be first K2 similarities of the similarities that are between the to-be-queried vector and the m second cluster center vectors and that are sorted in descending order, where K2 is a positive integer.

Step (3): The computing device 20 finds, based on the second cluster center vector corresponding to the to-be-queried vector, a second cluster (which may be referred to as a second candidate cluster) corresponding to the second cluster center vector corresponding to the to-be-queried vector.

Step (4): The computing device 20 searches a plurality of feature vectors included in the second candidate cluster for the target feature vector.

Optionally, a similarity between the target feature vector and the to-be-queried vector meets a third preset condition. The third preset condition may be specifically that the similarity between the target feature vector and the to-be-queried vector is greater than a third similarity threshold. For example, the third similarity threshold is greater than the second similarity threshold. Alternatively, the third preset condition may be that the similarity between the target feature vector and the to-be-queried vector is first K3 similarities of similarities that are between the to-be-queried vector and all feature vectors in the second candidate cluster and that are sorted in descending order, where K3 is a positive integer.

Specifically, after determining the second candidate cluster, the computing device 20 may obtain, from the index library, the plurality of feature vectors included in the second candidate cluster. There may be one or more second candidate clusters, and each second candidate cluster may include a plurality of respective feature vectors. For example, after determining the one or more second candidate clusters, the computing device 20 obtains, from the index library, a plurality of feature vectors corresponding to each of the one or more second candidate clusters. Still with reference to the example in Table 2, for example, both the cluster 1-1 and the cluster 2-1 are second candidate clusters, the cluster 1-1 includes the feature vectors 1 to 100, the cluster 2-1 includes the feature vectors 301 to 400, and the computing device 20 may obtain 200 feature vectors. The computing device 20 determines a similarity between the to-be-queried vector and each of the plurality of feature vectors, and selects, from the plurality of feature vectors based on the similarity between the to-be-queried vector and each of the plurality of feature vectors, a feature vector whose similarity meets the third preset condition as the target feature vector.

Optionally, the to-be-queried vector may have M dimensions, and may be referred to as an M-dimensional to-be-queried vector. The computing device 20 may first perform dimension reduction on the M-dimensional to-be-queried vector, to obtain an N-dimensional to-be-queried vector. Specifically, the computing device 20 may evenly group, in a dimension reduction manner in a storage process (for details, refer to descriptions in embodiments related to FIG. 7 and FIG. 8), M elements corresponding to the M-dimensional to-be-queried vector into N feature dimension groups, and then respectively map the N feature dimension groups to N elements, to form the N-dimensional to-be-queried vector. After the computing device 20 performs dimension reduction on the M-dimensional to-be-queried vector to obtain the N-dimensional to-be-queried vector, the computing device 20 may obtain a plurality of N-dimensional feature vectors in the second candidate cluster, and then determine a similarity between the N-dimensional to-be-queried vector and each of the plurality of N-dimensional feature vectors in the second candidate cluster. In this way, when a similarity between two vectors is computed, a computing workload of the computing device 20 is reduced, so that searching efficiency is improved.

It should be noted that a representation form of the index library depends on a quantity of levels of clustering performed by the computing device 20 on the feature vectors in the feature library. When the computing device 20 performs two-level clustering on the feature vectors in the feature library, for the representation form of the index library, refer to Table 2. When the computing device 20 performs multi-level (for example, three-level) clustering on the feature vectors in the feature library, for the representation form of the index library, refer to Table 3.

The following describes two cases based on the quantity of levels of clustering performed by the computing device 20 on the feature vectors in the feature library.

Case 1: The computing device 20 performs two-level clustering on the feature vectors in the feature library.

It may be understood that a first cluster in the feature library is a first-level cluster, and a second cluster in the feature library is a second-level cluster.

When determining the target feature vector based on the to-be-queried vector and the index library, the computing device 20 may replace the "first cluster" in step (1) to step (4) with the "first-level cluster", replace the "second cluster" with the "second-level cluster", replace the "first candidate cluster" with a "first-level candidate cluster", and replace the " second candidate cluster" with a "second-level candidate cluster".

For example, the computing device 20 searches the index library for the first index corresponding to the to-be-queried vector, where the first index corresponds to the first-level candidate cluster, and the first index includes cluster center vectors (that is, the second-level cluster center vectors) of a plurality of second-level clusters included in the first-level candidate cluster. The computing device 20 searches the first index for a second-level cluster center vector corresponding to the to-be-queried vector, finds, based on the second-level cluster center vector, a second-level candidate cluster corresponding to the second-level cluster center vector, and searches a plurality of feature vectors included in the selected second-level candidate cluster for the target feature vector.

Case 2: The computing device 20 performs multi-level clustering on the feature vectors in the feature library.

Three-level clustering is used as an example. When determining the target feature vector based on the to-be-queried vector and the index library, the computing device 20 may replace the "first cluster" in step (1) to step (4) with a "second-level cluster", replace the "second cluster" with a "third-level cluster", replace the "first candidate cluster" with a "second-level candidate cluster", and replace the "second candidate cluster" with a "third-level candidate cluster".

Before step (1), the computing device first selects the first-level candidate cluster from a plurality of first-level clusters, where the first candidate-level cluster includes a plurality of second-level clusters in total, and the index library includes indexes respectively corresponding to the plurality of second-level clusters. Further, the computing device 20 searches, based on the to-be-queried vector, the indexes respectively corresponding to the plurality of second-level clusters for the first index corresponding to the to-be-queried vector, where the first index corresponds to the second candidate cluster. The computing device 20 searches the first index for a third-level cluster center vector corresponding to the to-be-queried vector, finds, based on the third-level cluster center vector, a third-level candidate cluster corresponding to the third-level cluster center vector, and searches a plurality of feature vectors included in the third-level candidate cluster for the target feature vector.

When the computing device 20 performs more-level clustering on the feature vectors in the feature library, a determining manner is similar to that in Case 1 and Case 2. Details are not described again.

Optionally, in the foregoing step 902, a data format of the target feature vector obtained by the computing device 20 is INT8. For details, refer to descriptions in embodiments related to FIG. 7 and FIG. 8. Then, the computing device 20 may first perform dequantization processing on the target feature vector of INT8, to obtain an N-dimensional feature vector whose data format is FP32.

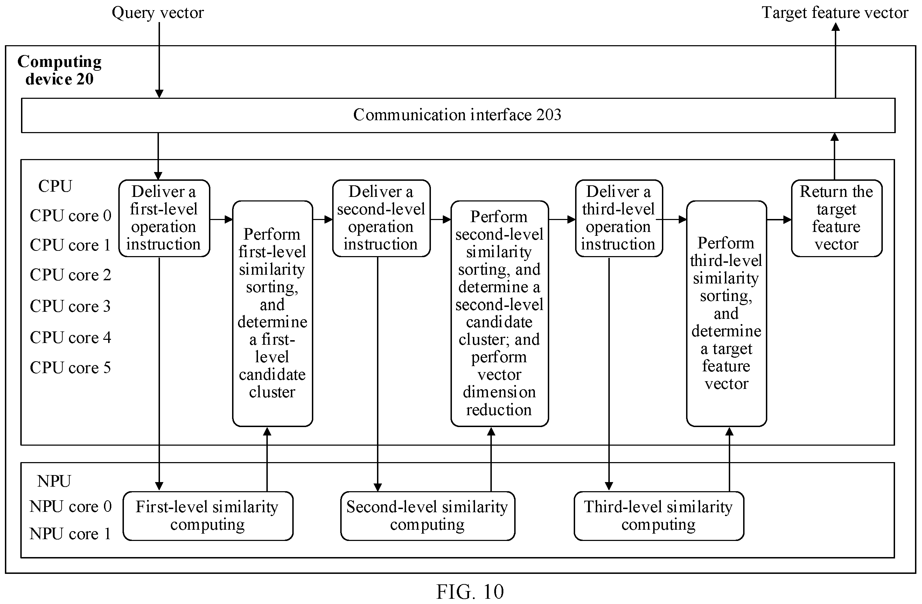

It should be noted that all steps in the foregoing method embodiments are described by using an example in which the computing device 20 performs the steps. In addition, the steps in the foregoing method embodiments may alternatively be performed by a processor 201 in the computing device 20. FIG. 10 shows an example of a schematic flowchart of performing vector search by a processor 201 in a computing device 20 in a case of two-level clustering according to this application. For a structure of the processor 201 in the computing device 20, refer to FIG. 3.

A CPU may be configured to perform operation instruction delivery, similarity sorting, vector dimension reduction, and the like. An NPU may be configured to perform similarity computing between vectors. For details, refer to FIG. 10.

The CPU may obtain, through a communication interface 203, a to-be-queried vector input by a user.

In first-level vector search, the CPU delivers a first-level operation instruction to the NPU, where the first-level arithmetic instruction includes a similarity operator, the to-be-queried vector, and cluster center vectors (namely, first cluster center vectors) of a plurality of first-level clusters. Herein, the similarity operator indicates the NPU to compute a similarity between the to-be-queried vector and each of the cluster center vectors of the plurality of first-level clusters. Correspondingly, the NPU performs first-level similarity computing. To be specific, the NPU computes the similarity between the to-be-queried vector and each of the cluster center vectors of the plurality of first-level clusters, and reports a similarity computing result to the CPU. The CPU performs first-level similarity sorting based on the similarity computing result, and then selects one or more first-level candidate clusters (namely, first candidate clusters) from the plurality of first-level clusters. The one or more first-level candidate clusters respectively correspond to a plurality of second-level clusters of each of the one or more first-level candidate clusters. That is, the CPU may further determine a plurality of second-level clusters.

In second-level vector search, the CPU delivers a second-level operation instruction to the NPU, where the second-level operation instruction includes a similarity operator, the to-be-queried vector, and cluster center vectors (namely, second cluster center vectors) of a plurality of second-level clusters. Herein, the similarity operator indicates the NPU to compute a similarity between the to-be-queried vector and each of the cluster center vectors of the plurality of second-level clusters. Correspondingly, the NPU performs second-level similarity computing. To be specific, the NPU computes the similarity between the to-be-queried vector and each of the cluster center vectors of the plurality of second-level clusters, and then reports a similarity computing result to the CPU. The CPU performs second-level similarity sorting based on the similarity computing result, and then selects one or more second-level candidate clusters (namely, second candidate clusters) from the plurality of second-level clusters. The one or more second-level candidate clusters respectively correspond to a plurality of feature vectors of each of the one or more second-level candidate clusters. That is, the CPU may further determine a plurality of feature vectors. In addition, in the second-level vector search, the CPU may further perform dimension reduction on the to-be-queried vector, that is, obtain an N-dimensional to-be-queried vector by performing dimension reduction on an M-dimensional to-be-queried vector.

In third-level vector search, the CPU delivers a third-level operation instruction to the NPU, where the third-level operation instruction includes a similarity operator, the to-be-queried vector, and the plurality of feature vectors determined in the second-level vector search. Herein, the similarity operator indicates the NPU to compute a similarity between the to-be-queried vector and each of the plurality of feature vectors. Correspondingly, the NPU performs third-level similarity computing. To be specific, the NPU computes the similarity between the to-be-queried vector and each of the plurality of feature vectors, and then reports a similarity computing result to the CPU. The CPU performs third-level similarity sorting based on the similarity computing result, and then selects one or more feature vectors from the plurality of feature vectors as the target feature vector.

The CPU feeds back the determined target feature vector to the user through the communication interface 203.

Further, the CPU may include six CPU cores, which are respectively represented as a CPU core 0 to a CPU core 5. The CPU core 0 may be configured to: deliver the first-level operation instruction, the second-level operation instruction, and the third-level operation instruction, obtain, through the communication interface 203, the to-be-queried vector input by the user, and feed back the target feature vector to the user. The CPU core 0 to the CPU core 5 may be configured to jointly perform first-level similarity sorting, second-level similarity sorting, third-level similarity sorting, and vector dimension reduction.

The NPU may include two NPU cores, which are respectively represented as an NPU core 0 and an NPU core 1. The NPU core 0 and the NPU core 1 may be configured to jointly perform first-level similarity computing, second-level similarity computing, and third-level similarity computing.

For the foregoing first-level vector search to third-level vector search, refer to descriptions in the embodiment related to FIG. 9. Details are not described again.

Based on the foregoing content and a same concept, an embodiment of this application provides a computer-readable storage medium. The computer-readable storage medium stores a computer program or instructions. When the computer program or the instructions are executed, a computer is enabled to perform the methods in the foregoing method embodiments.

Based on the foregoing content and a same concept, an embodiment of this application provides a computer program product. When a computer reads and executes the computer program product, the computer is enabled to perform the methods in the foregoing method embodiments.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

It is clear that a person skilled in the art can make various modifications and variations to this application without departing from the protection scope of this application. Therefore, this application is intended to cover these modifications and variations of this application provided that they fall within the scope of the claims of this application and their equivalent technologies.

## Claims

1. A vector search method, comprising:

   obtaining a to-be-queried vector;
   searching an index library for a first index corresponding to the to-be-queried vector, wherein the index library comprises a plurality of indexes, each index corresponds to one first cluster, the first cluster comprises a plurality of second clusters, each index records a first cluster center vector and a plurality of second cluster center vectors, feature vectors corresponding to the first cluster are clustered by using the first cluster center vector, and feature vectors corresponding to each second cluster are clustered by using each second cluster center vector;
   searching the first index for a second cluster center vector corresponding to the to-be-queried vector;
   finding a second cluster corresponding to the second cluster center vector based on the second cluster center vector; and
   searching a plurality of feature vectors comprised in the second cluster for a target feature vector related to the to-be-queried vector.

2. The method according to claim 1, wherein the searching an index library for a first index corresponding to the to-be-queried vector comprises:
   comparing the to-be-queried vector with the first cluster center vectors recorded by the plurality of indexes in the index library, wherein a comparison result indicates that the first index meets a first preset condition.

3. The method according to claim 1, wherein the to-be-queried vector is M-dimensional, wherein M is a positive integer, and the feature vector in the second cluster is N-dimensional, wherein N is a positive integer, and N is less than M; and the searching a plurality of feature vectors comprised in the second cluster for a target feature vector related to the to-be-queried vector comprises:

   performing dimension reduction from M dimensions to N dimensions on the to-be-queried vector;
   determining a similarity between the to-be-queried vector and each of the plurality of feature vectors in the second cluster; and
   selecting the target feature vector from the plurality of feature vectors based on the similarity.

4. The method according to any one of claims 1 to 3, further comprising:

   determining X first cluster center vectors, and clustering feature vectors in a feature library into X first clusters by using each of the X first cluster center vectors as a center;

determining Y second cluster center vectors for each of the X first clusters, and clustering feature vectors in the first cluster into Y second clusters by using the Y second cluster center vectors as centers; and

generating one index for each first cluster, wherein the index is used to record the first cluster center vector and the second cluster center vectors corresponding to the first cluster center vector, wherein

both X and Y are positive integers.

5. The method according to claim 4, wherein after the clustering feature vectors in the first cluster into Y second clusters by using the Y second cluster center vectors as centers, the method further comprises:

selecting a third cluster from the Y second clusters, wherein a quantity of feature vectors in the third cluster is less than a threshold;

determining a second cluster center vector closest to a second cluster center vector of the third cluster; and

combining the feature vectors in the third cluster into a second cluster corresponding to the determined second cluster center vector.

6. A vector search apparatus, comprising a processor, wherein the processor is connected to a storage, the storage is configured to store a computer program, and when executing the computer program stored in the storage, the processor is configured to:

obtain a to-be-queried vector;

search an index library for a first index corresponding to the to-be-queried vector, wherein the index library comprises a plurality of indexes, each index corresponds to one first cluster, the first cluster comprises a plurality of second clusters, each index records a first cluster center vector and a plurality of second cluster center vectors, feature vectors corresponding to the first cluster are clustered by using the first cluster center vector, and feature vectors corresponding to each second cluster are clustered by using each second cluster center vector;

search the first index for a second cluster center vector corresponding to the to-be-queried vector;

find a second cluster corresponding to the second cluster center vector based on the second cluster center vector; and

search a plurality of feature vectors comprised in the second cluster for a target feature vector related to the to-be-queried vector.

7. The apparatus according to claim 6, wherein when searching the index library for the first index corresponding to the to-be-queried vector, the processor is specifically configured to:
compare the to-be-queried vector with the first cluster center vectors recorded by the plurality of indexes in the index library, wherein a comparison result indicates that the first index meets a first preset condition.

8. The apparatus according to claim 6, wherein the to-be-queried vector is M dimensional, wherein M is a positive integer, and the feature vector in the second cluster is N dimensional, wherein N is a positive integer, and N is less than M; and when searching the plurality of feature vectors comprised in the second cluster for the target feature vector related to the to-be-queried vector, the processor is specifically configured to:

perform dimension reduction from M dimensions to N dimensions on the to-be-queried vector;

determine a similarity between the to-be-queried vector and each of the plurality of feature vectors in the second cluster; and

select the target feature vector from the plurality of feature vectors based on the similarity.

9. The apparatus according to any one of claims 6 to 8, wherein the processor is further configured to:

determine X first cluster center vectors, and cluster feature vectors in a feature library into X first clusters by using each of the X first cluster center vectors as a center;

determine Y second cluster center vectors for each of the X first clusters, and cluster feature vectors in the first cluster into Y second clusters by using the Y second cluster center vectors as centers; and

generate one index for each first cluster, wherein the index is used to record the first cluster center vector and the second cluster center vectors corresponding to the first cluster center vector, wherein

both X and Y are positive integers.

10. The apparatus according to claim 9, wherein after clustering the feature vectors in the first cluster into the Y second clusters by using the Y second cluster center vectors as centers, the processor is further configured to:

select a third cluster from the Y second clusters, wherein a quantity of feature vectors in the third cluster is less than a threshold;
determine a second cluster center vector closest to a second cluster center vector of the third cluster; and
combine the feature vectors in the third cluster into a second cluster corresponding to the determined second cluster center vector.

11. A computer-readable storage medium, wherein the computer-readable storage medium stores a computer program or instructions, and when the computer program or the instructions are executed by a vector search apparatus, the method according to any one of claims 1 to 5 is implemented.

12. A chip, comprising at least one processor and an interface, wherein the interface is configured to provide program instructions or data for the at least one processor, and the at least one processor is configured to execute the program instructions, to implement the method according to any one of claims 1 to 5.

Collection
device 10

Collection
device 10

Collection
device 10

Network

Computing
device 20

Computing
device 20

Computing
device 20

FIG. 1

Computing
device 20

Processor
201

Communication
interface 203

Bus 204

Memory
202

FIG. 2

**Computing device 20**

Processor 201
(NPU)

NPU core×2

Processor 201
(CPU)

CPU core×6

Bus 204

Memory 202

Communication interface 203

FIG. 3

Feature extraction phase

Picture

Picture

Picture

CNN model

Feature vector

Index generation phase

Vector search phase

FIG. 4

501: A computing device 20 determines X first clusters

502: The computing device 20 determines a plurality of second clusters in each of the X first clusters based on a plurality of feature vectors in the first cluster

503: The computing device 20 establishes an index library based on the X first clusters and the plurality of second clusters in each of the X first clusters

FIG. 5

601: A computing device 20 may select a redundant cluster corresponding to each feature vector in a feature library from X first clusters

602: The computing device 20 selects, from a plurality of feature vectors based on a similarity between each feature vector in the feature library and a cluster center vector of the redundant cluster corresponding to the feature vector, a redundant feature vector that needs to be redundantly stored

FIG. 6

701: A computing device 20 performs dimension reduction on each M-dimensional feature vector in a second cluster, to obtain an N-dimensional feature vector corresponding to the M-dimensional feature vector

a: The computing device 20 determines a vector matrix based on a plurality of M-dimensional feature vectors in the second cluster, and determines a similarity between every two dimensions in the vector matrix

b: The computing device 20 evenly groups M dimensions in the vector matrix into N feature dimension groups based on the similarity between every two dimensions in the vector matrix

702: The computing device 20 stores the N-dimensional feature vector corresponding to the M-dimensional feature vector in the second cluster

c: The computing device 20 maps dimensions in a same feature dimension group in any M-dimensional feature vector to one element, to respectively map the N feature dimension group to N elements to form the N-dimensional feature vector

FIG. 7

(a) 256-dimensional, FP32

| $x_{h1}$ | ... | $x_{hi}$ | $x_{hj}$ | ... | $x_{hm}$ | $x_{hn}$ | ... | $x_{h256}$ |

$x_{lk}=F(x_{hi}, x_{hj}, x_{hm}, x_{hn})$

(b) 64-dimensional, FP32

| $x_{l1}$ | ... | $x_{lk}$ | ... | $x_{l64}$ |

(c) 64-dimensional, INT8

| $q_{j1}$ | ... | $q_{j2}$ | ... | $q_{j64}$ |

FIG. 8

901: A computing device 20 obtains a to-be-queried vector

↓

902: The computing device 20 selects a target feature vector related to the to-be-queried vector from a feature library based on the to-be-queried vector and an index library

(1): The computing device 20 searches the index library for a first index corresponding to the to-be-queried vector

↓

(2): The computing device 20 searches the first index for a second cluster center vector corresponding to the to-be-queried vector

↓

(3): The computing device 20 finds, based on the second cluster center vector corresponding to the to-be-queried vector, a second cluster (which may be referred to as a second candidate cluster) corresponding to the second cluster center vector corresponding to the to-be-queried vector

↓

(4): The computing device 20 searches a plurality of feature vectors included in the second candidate cluster for the target feature vector

FIG. 9

Query vector

Target feature vector

**Computing device 20**

Communication interface 203

CPU

CPU core 0

CPU core 1

CPU core 2

CPU core 3

CPU core 4

CPU core 5

| Deliver a first-level operation instruction | Perform first-level similarity sorting, and determine a first-level candidate cluster | Deliver a second-level operation instruction | Perform second-level similarity sorting, and determine a second-level candidate cluster; and perform vector dimension reduction | Deliver a third-level operation instruction | Perform third-level similarity sorting, and determine a target feature vector | Return the target feature vector |

NPU

NPU core 0

NPU core 1

First-level similarity computing

Second-level similarity computing

Third-level similarity computing

FIG. 10

EP 4 492 259 A1

| | | |
|---|---|---|
| | **INTERNATIONAL SEARCH REPORT** | International application No. |
| | | **PCT/CN2023/095087** |

| | |
|---|---|
| **A.** | **CLASSIFICATION OF SUBJECT MATTER** |
| | G06F16/583(2019.01)i;  G06F18/2411(2023.01)i;  G06N20/00(2019.01)i |
| | According to International Patent Classification (IPC) or to both national classification and IPC |

| | |
|---|---|
| **B.** | **FIELDS SEARCHED** |
| Minimum documentation searched (classification system followed by classification symbols) | |
| IPC:G06F,G06N | |
| Documentation searched other than minimum documentation to the extent that such documents are included in the fields searched | |
| Electronic data base consulted during the international search (name of data base and, where practicable, search terms used) | |
| CNTXT, VEN, VCN, EPTXT, USTXT, IEEE, CNKI: 向量检索, 簇, 索引库, 降维, 相似度, Vector retrieval, cluster, index database, Dimensionality reduction, Similarity | |

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | CN 110880005 A (ALIBABA GROUP HOLDING LIMITED) 13 March 2020 (2020-03-13) description, paragraphs [0077]-[0164] | 1-12 |
| A | CN 113761261 A (TENCENT TECHNOLOGY (SHENZHEN) CO., LTD.) 07 December 2021 (2021-12-07) entire document | 1-12 |
| A | WO 2020199773 A1 (BOE TECHNOLOGY GROUP CO., LTD. et al.) 08 October 2020 (2020-10-08) entire document | 1-12 |

☐ Further documents are listed in the continuation of Box C.    ☑ See patent family annex.

| | |
|---|---|
| \*   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **21 June 2023** | **23 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/095087**

| Patent document cited in search report | | | Publication date (day/month/year) | Patent family member(s) | Publication date (day/month/year) |
|---|---|---|---|---|---|
| CN | 110880005 | A | 13 March 2020 | None | |
| CN | 113761261 | A | 07 December 2021 | None | |
| WO | 2020199773 | A1 | 08 October 2020 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210546971